# EUROPÄISCHE PATENTSCHRIFT

(11) **EP 1 918 094 B1**
(45) Veröffentlichungstag und Bekanntmachung des Hinweises auf die Patenterteilung: **05.08.2009**
(21) Anmeldenummer: 07011650.4
(22) Anmeldetag: 14.06.2007
(51) Int. Cl.: B32B 15/08, B65D 85/60

(54) **Verpackungsfolie**
Packaging film
Feuille d'emballage

(30) Priorität: 31.10.2006 DE 202006016691 U
(43) Veröffentlichungstag der Anmeldung: 07.05.2008
(73) Patentinhaber: Constantia Hueck Folien GmbH & Co. KG, 92712 Pirk (DE)
(72) Erfinder: Geitner, Werner, 92699 Irchenrieth (DE); Hofmann, Manfred, 92712 Pirk (DE); Urbanczyk, Reinhard, 92637 Weiden (DE)
(74) Vertreter: Schneck, Herbert

(56) Entgegenhaltungen:
- EP-A- 0 307 833
- EP-A- 1 080 877
- EP-A1- 1 462 243
- EP-A2- 0 945 252
- DE-A1- 3 005 051
- DE-U1- 8 814 455
- DATABASE WPI Week 199943 Derwent Publications Ltd., London, GB; AN 1999-512296 XP002445695 & JP 11 222262 A (ASAHI KASEI KOGYO KK) 17. August 1999 (1999-08-17)

## Beschreibung

Die Erfindung richtet sich auf eine Verpackungsfolie, umfassend eine Aluminiumfolie, zum Verpacken von Lebensmittelprodukten, insbesondere von zum Verzehr bestimmten Figuren.

Derartige Figuren, wie z.B. Schokolade-Osterhasen, werden herkömmlicherweise mit einer bedruckten Aluminium-Monofolie maschinell verpackt, wobei die Folie von Vorratsrollen abgezogen wird. Es werden auch formatgeschnittene Folienbögen zum manuellen Einwickeln eingesetzt. Wenn solche Figuren stark konvexe oder konkave Abschnitte aufweisen, wie z.B. im Nackenbereich eines Schokoladen-Hasen, kann es beim maschinellen und manuellen Verpacken zu Rissen in diesen Bereichen kommen.

In der DE 88 14 455 U1 wird eine Verpackungsfolie für Bonbons, die eine Polymerfolie und eine Metallschicht umfasst, beschrieben. Die aus Aluminium bestehende Metallschicht ist dünner als 1 µm. Die Polymerfolie besteht aus Homopolypropylen oder einem Random-Propylen-Polyethylen-Copolymer.

In der EP 0 945 252 A2 wird eine Verbundfolie umfassend eine Aluminiumschicht und eine darauf aufgebrachte Extrusionsbeschichtung aus einer Polyethylenschicht beschrieben. Diese Verbundfolie dient zum Verpacken von Trockennahrungsmitteln. Sie hat eine gute feuchtigkeitsabweisende Wirkung.

In der EP 1 080 877 A2 wird eine Folie zur Verpackung kleiner Gegenstände durch Umwickeln des Gegenstands mit der Folie und zur Sicherung der Umwicklung mittels eines Dreheinschlags beschrieben. Der Dreheinschlag ist mit einer siegelbaren Schicht zur Erzeugung eines Klebeverschlusses versehen. Die Verbundfolie besteht aus einer Trägerfolie, beispielsweise aus einem Polyester und mit einer Dicke von 8 µm bis 180 µm, auf die eine Sperrschicht aus einer Aluminiumfolie aufgebracht sein kann.

In der EP 0 307 833 A2 wird eine Packung für ein Nahrungsmittel beschrieben. Das Verpackungsmaterial besteht aus einer laminierten Kunststoff-Aluminium-Folie, wobei die Aluminiumschicht 30 µm dick ist und eine als Kunststoffschicht verwendete Polypropylenschicht 40 µm dick ist. Alternativ kann auch eine Polyamidschicht mit einer Dicke von 25 µm verwendet werden. Die Verpackungsfolie dient nicht zum unmittelbaren Einwickeln des Nahrungsmittels. Es wird vielmehr eine schachtelartige Verpackung realisiert.

In der DE 30 05 051 A1 wird eine mehrschichtige, außen bedruckte und überlackierte Folienbahn zum Verpacken von Lebensmitteln, insbesondere von Schokolade, beschrieben. Die Folienbahn hat einen mehrschichtigen Aufbau. Die Schichtstruktur weist von außen nach innen eine Lackschicht, eine bedruckte Aluminiumfolie einer Dicke von 6 µm bis 9 µm, eine Papierschicht, eine Klebeschicht, eine 12 µm bis 15 µm dicke Polypropylenschicht sowie eine Schicht aus Kaltsiegelmasse auf.

In der JP 11 222 262 A wird ein Verpackungsmaterial aus einer Verbundfolie mit einer 5 µm bis 50 µm dicken Aluminiumfolie und einer 10 µm bis 40 µm dicken Polystyrolfolie beschrieben.

In der EP 1 462 243 A1 wird eine Verpackungsverbundfolie zur Verpackung von beispielsweise Schokoladenkugeln beschrieben. Diese Verbundfolie umfasst eine Trägerfolie aus einer 20 µm dicken Polypropylenfolie, auf die eine Aluminiumbeschichtung aufgebracht ist, die ihrerseits mit einer Bedruckung versehen ist. Darüber ist mittels eines Kaschierlacks eine Deckfolie aufgebracht.

Hiervon ausgehend liegt der Erfindung die Aufgabe zugrunde, eine Verpackungsfolie zu schaffen, die wie eine herkömmliche Folie maschinell mit den bekannten hierfür vorhandenen Maschinen und manuell verarbeitet werden kann, wobei aber das Problem der Rissbildung vermieden wird.

Diese Aufgabe wird erfindungsgemäß dadurch gelöst, dass eine Verbundfolie in Form einer Aluminiumfolie mit einer Kunststoff-Folie bzw. einem
- Film, insbesondere Polypropylen- oder PET-Folie eingesetzt wird.

Eine derartige beschichtete Folie besitzt wesentlich höhere Festigkeiten als die bisher eingesetzten Mono-Aluminiumfolien, wobei jedoch im wesentlichen die bisherigen Verarbeitungsmöglichkeiten gewahrt bleiben und auch das Erscheinungsbild des fertigen Produkts, also z.B. einer verpackten Schokoladen-Hohlfigur, im wesentlichen unverändert bleibt.

Die Verpackung erfolgt dabei bevorzugt so, dass im verpackten Zustand die Aluminiumfolie außen und die Kunststoff-Folie innen liegt. Grundsätzlich ist auch eine umgekehrte Anordnung möglich.

Die Verbundfolie kann je nach Anwendungsfall auch geprägt werden.

Die Kunststoff-Folie kann durch Extrusionsbeschichtung oder durch Aufkaschieren einer entsprechenden Folie auf die Aluminiumfolie aufgebracht werden.

Die Aluminiumfolie hat eine Dicke von 6 bis 20 µm, insbesondere ca. 10 µm .

Die Schichtdicke der Kunststoff-Folie bzw. des Kunststoff-Films beträgt 5 µm.

Die Verbundfolie kann außenseitig mehrfarbig bedruckt und/oder innenseitig vollflächig oder partiell aufgebracht mit einem siegelfähigen Lack versehen sein. Andererseits sind auch Ausführungsformen ohne Heißsiegellack möglich.

Die Erfindung betrifft auch die Verwendung einer mit Kunststoff-Folie bzw. Kunststoff-Film kaschierten Aluminiumfolie als Verpackung, insbesondere für zum Verzehr bestimmten Figuren, wie Schokolade-Osterhasen.

Letztlich richtet sich die Erfindung auch auf eine zum Verzehr bestimmte Figur mit einer Verpackungsfolie, die sich dadurch auszeichnet, dass die Folie eine Verbundfolie aus einer Aluminiumfolie und einer Kunststoff-Folie bzw. eines Kunststoff-Films, insbesondere Polypropylen- oder PET-Folie ist.

Nachfolgend wird die Erfindung anhand eines bevorzugten Ausführungsbeispiels in Verbindung mit der Zeichnung näher erläutert. Dabei zeigen:
Fig. 1 und Fig. 2 jeweils ein Ausführungsbeispiel für den schematischen Schichtaufbau einer erfindungsgemäßen Verpackungsfolie
   und
Fig. 3 einen erfindungsgemäß verpackten Schokoladen-Hasen.

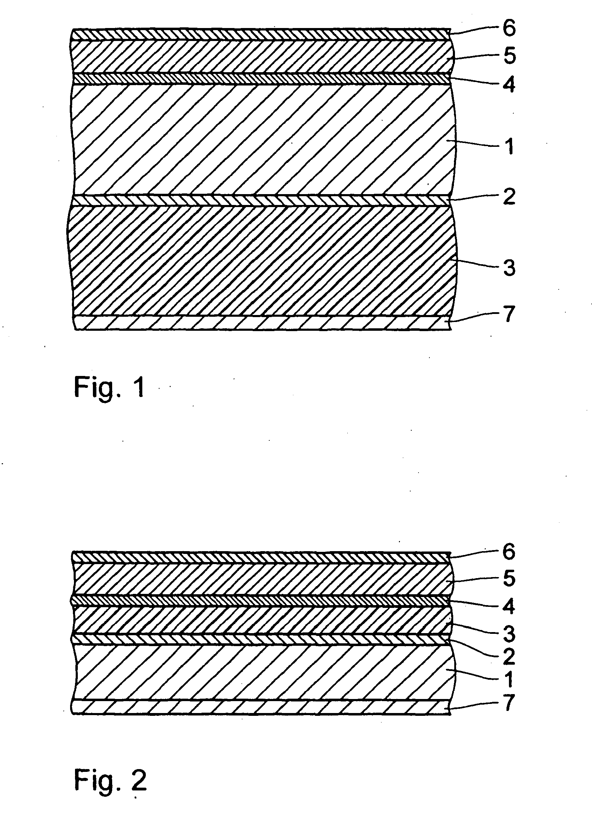

Bei dem Ausführungsbeispiel nach Fig. 1 ist eine Aluminiumfolie 1 von 10 µm Dicke über einen Kaschierlack 2 mit einer Polypropylenfolie 3 von 5 µm Dicke kaschiert.

Bezogen auf das fertig verpackte Produkt ist die Außenseite der Aluminiumfolie mit einem Primer 4 und einer Druckschicht 5 sowie einer Schutzlackschicht 6 versehen. An der Innenseite ist die Polypropylenfolie 3 mit einem Heißsiegellack 7 beschichtet.

Bei dem in Fig. 2 dargestellten zweiten Ausführungsbeispiel ist eine Aluminiumfolie 1 von 10 µm Dicke über eine Kaschierlackschicht 2 mit einer Polypropylenfolie 3 von 5 µm Dicke verbunden. In diesem Ausführungsbeispiel liegt die Polypropylenfolie 3 außen. Diese ist wiederum mit einer Primerschicht 4 versehen, auf die eine Druckschicht 5 aufgebracht ist, der wiederum mit einer Schutzlackschicht 6 versehen ist. Auf der Innenseite der Aluminiumfolie 1 ist ein Heißsiegellack 7 angebracht.

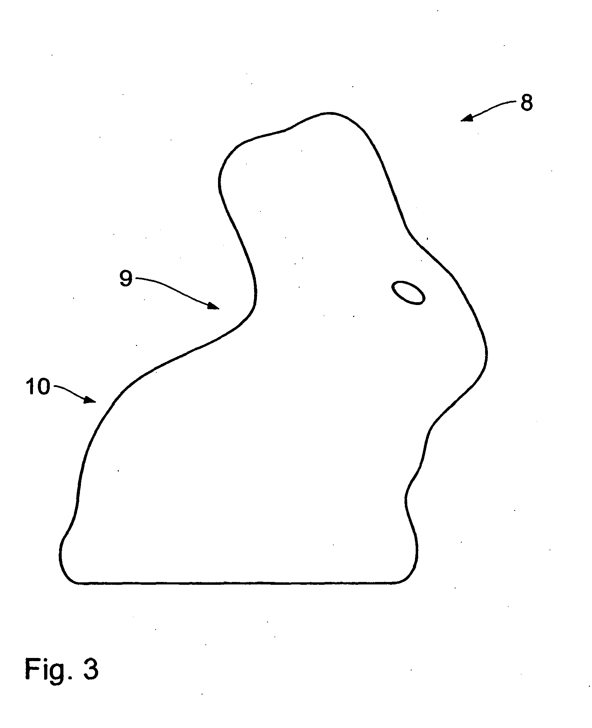

Ein vorstehend beschriebener Folienverbund eignet sich als Verpackung für einen Schokoladenhohlkörper, wie er in Fig. 3 in Form eines Schokoladenhasen dargestellt ist. Dieser Schokoladenhohlkörper 8 weist beispielsweise zwei besonders problematische Bereiche auf, nämlich den Bereich 9 im Nacken und einen weiteren konkaven Bereich 10 am Rücken. Bei herkömmlichen Aluminium-Mono-Folien treten in diesem Bereich Risse auf. Diese werden durch die erfindungsgemäß verwendete Aluminium-Polypropylen-Verbundfolie vermieden.

## Patentansprüche

1. Zum Verzehr bestimmte Schokoladenfigur mit einem konvexen und einem konkaven Bereich (9, 10), die in eine Verpackungsfolie eingewickelt ist, **dadurch gekennzeichnet, dass** die Verpackungsfolie eine Verbundfolie aus einer Aluminiumfolie (1) einer Dicke von 6 µm bis 20 µm und aus einem Kunststoff-Film (3) einer Dicke von 5 µm ist, wobei die Aluminiumfolie (1) über einen Kaschierlack (2) mit dem Kunststoff-Film (3) kaschiert ist.

2. Schokoladenfigur nach Anspruch 1, **dadurch gekennzeichnet, dass** die Aluminiumfolie (1) 10 µm dick ist.

3. Schokoladenfigur nach Anspruch 1 oder 2, **dadurch gekennzeichnet, dass** der Kunststoff-Film aus Polypropylen oder Polyester besteht.

4. Schokoladenfigur nach einem der vorhergehenden Ansprüche, **dadurch gekennzeichnet, dass** die Verbundfolie außenseitig mehrfarbig bedruckt ist.

5. Schokoladenfigur nach einem der vorhergehenden Ansprüche, **dadurch gekennzeichnet, dass** die Verbundfolie innenseitig vollflächig oder partiell aufgebracht mit einem siegelfähigen Lack (7) versehen ist.

6. Schokoladenfigur nach einem der vorhergehenden Ansprüche, **dadurch gekennzeichnet, dass** die Verpackungsfolie ganz oder teilweise geprägt ist.

## Claims

1. Chocolate figure intended for consumption with a convex and a concave region (9, 10), the chocolate figure being wrapped in a packaging foil, **characterized in that** the packaging foil is a compound foil of an aluminium foil (1) with a thickness of 6 µm to 20 µm and of a plastic film (3) with a thickness of 5 µm, with the aluminium foil (1) being laminated to the plastic film (3) by means of a laminating lacquer (2).

2. Chocolate figure according to claim 1, **characterized in that** the aluminium foil (1) has a thickness of 10 µm.

3. Chocolate figure according to claim 1 or 2, **characterized in that** the plastic film consists of polypropylene or polyester.

4. Chocolate figure according to one of the preceding claims, **characterized in that** the compound foil is provided with a multicolour printing on its outside.

5. Chocolate figure according to one of the preceding claims, **characterized in that** the compound foil is provided with a sealing lacquer (7) which is applied to the entire or part of the inner surface thereof.

6. Chocolate figure according to one of the preceding claims, **characterized in that** the packaging foil is entirely or partially embossed.

## Revendications

1. Figurine en chocolat destinée à la consommation, avec une partie convexe et une partie concave (9, 10), enveloppée dans une feuille d'emballage, **caractérisée en ce que** la feuille d'emballage est une feuille composite d'une feuille en aluminium (1) d'une épaisseur comprise entre 6 µm et 20 µm et d'un film plastique (3) d'une épaisseur de 5 µm, la feuille en aluminium (1) étant contrecollée avec le film plastique (3) au moyen d'un vernis de contre-collage (2).

2. Figurine en chocolat selon la revendication 1,
**caractérisée en ce que** la feuille en aluminium (1) est épaisse de 10 µm.

3. Figurine en chocolat selon la revendication 1 ou la revendication 2, **caractérisée en ce que** le film plastique est en polypropylène ou en polyester.

4. Figurine en chocolat selon l'une des revendications précédentes, **caractérisée en ce que** la feuille composite est imprimée en polychromie sur sa face extérieure.

5. Figurine en chocolat selon l'une des revendications précédentes, **caractérisée en ce que** la feuille composite est pourvue d'un vernis scellable (7) intégralement ou partiellement appliqué sur sa face intérieure.

6. Figurine en chocolat selon l'une des revendications précédentes, **caractérisée en ce que** la feuille d'emballage est intégralement ou partiellement gaufrée.
